# EUROPEAN PATENT APPLICATION

(11) **EP 1 975 770 A2**
(43) Date of publication of application: **01.10.2008**
(21) Application number: 08100437.6
(22) Date of filing: 14.01.2008
(51) Int. Cl.: G06F 3/06

(54) **External storage device and method of automatically operating the same**

(30) Priority: 27.03.2007 KR 20070030032
(71) Applicant: SAMSUNG ELECTRONICS CO., LTD., Suwon-si, Gyeonggi-do 442-742 (KR)
(72) Inventor: Jeon, Yu-seong, Seoul (KR); Kim, Cory 113-302 Newtown Centraus Apt. 371, Suwon-si, Gyeonggi-do (KR); Park, Won-joo 124-802 Sibeomdanji Hanshin Apt., Seongnam-si, Gyeonggi-do (KR); Kim, Du-il 08-1403 Dongsuwon LG Village 1-cha Apt., Suwon-si, Gyeonggi-do (KR)
(74) Representative: Perkins, Dawn Elizabeth

(57) **Abstract**

An external storage device and method of automatically operating the external storage device are provided. The external storage device includes a memory unit storing general data, a driver for operating the external storage device, an application program, an automatic execution program for executing the application program, and an automatic execution script for operating the automatic execution program; an automatic execution controller controlling an automatic execution of the driver and the application program; a general function controller controlling a general function of the external storage device; a general file management unit supporting an access to the general data stored in the memory unit; and an automatic execution file management unit supporting an access to the driver, the application program, the automatic execution program, and the automatic execution script, through the general file management unit according to a control signal of the automatic execution controller.

## Description

Methods and apparatuses consistent with the present invention relate to automatic execution of a program of an external universal serial bus (USB) mass storage device, and more particularly, to an external USB mass storage device capable of automatically executing a driver or a computer application program that is stored in a memory in order to operate the external USB mass storage device that is connected to a computer, and a method of automatically executing the external USB mass storage device.

External USB mass storage devices are provided to users along with a separate compact disk (CD) or digital versatile disk (DVD) containing necessary software such as device drivers and application programs in order to perform basic functions via a USB.

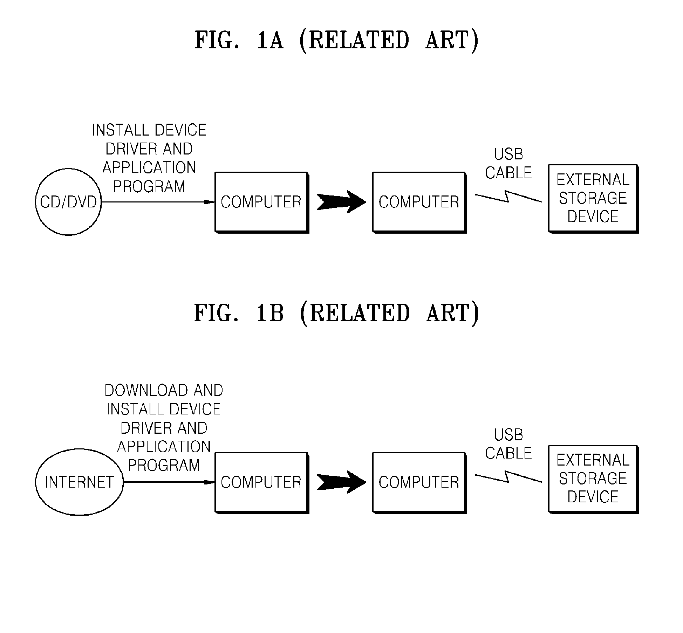

Figures 1A and 1B are diagrams for explaining a process of installing and executing device drivers and application programs for operating a related art external storage device. Referring to Figure 1A, a user installs on a computer a device driver and an application program contained in a CD or a DVD, and connects the computer to the external storage device in order to use the external storage device. Referring to Figure 1B, if there is no CD or a DVD provided, the user downloads the device driver and application program from the Internet, installs the device driver and application program on the computer, and connects the computer to the external storage device.

However, it is impossible to use the external storage device if a CD or a DVD is not provided or the computer cannot access the Internet. Further, whenever the computer connected to the external storage device is changed, the user needs to acquire the device driver and application program via a CD or a DVD or the Internet again and install the device driver and application on the new computer in order to use the external storage device. To address this disadvantage, technologies of storing the device driver and application program in the external storage device and automatically executing the device driver and application program have recently been discussed. In this case, the external storage device needs a separate memory such as a read-only memory (ROM) for storing the device driver and application program therein, or to partition a memory space in the external storage device. However, the separate memory increases memory consumption and it is impossible to efficiently use the partitioned memory space of the external storage device for storing the device driver and application program.

The present invention provides an external storage device capable of automatically executing a driver and an application program for operating the external storage device when the external storage device is connected to a computer and the computer recognizes the external storage device as a CD-ROM.

According to an aspect of the present invention, there is provided an external storage device comprising a memory unit storing general data, a driver for operating the external storage device, an application program used in a computer, an automatic execution program for automatically executing the application program in the computer, and an automatic execution script for operating the automatic execution program, wherein the driver, the application program, the automatic execution program and the automatic execution script are not partitioned from the general data; an automatic execution controller controlling an automatic execution of the driver and the application program in the computer; a general function controller controlling a general function of the external storage device; a general file management unit supporting an access to the general data stored in the memory unit according to a control signal of the general function controller; and an automatic execution file management unit supporting an access to the driver, the application program, the automatic execution program, and the automatic execution script, which are stored in the memory unit, through the general file management unit according to a control signal of the automatic execution controller.

According to another aspect of the present invention, there is provided a method of automatically operating an external storage device, the method comprising when a computer is connected to the external storage device comprising a memory unit storing general data, a driver for operating the external storage device, an application program used in the computer, an automatic execution program for automatically executing the application program in the computer, and an automatic execution script for executing the automatic execution program, wherein the driver, the application program, the automatic execution program and the automatic execution script are not partitioned from the general data, changing a mode of the external storage device to a mode for automatically operating the external storage device; and accessing the driver, the application program, the automatic execution program, and the automatic execution script from the memory unit and automatically executing the external storage device.

According to another aspect of the present invention, there is provided a computer readable recording medium storing a computer readable program for executing a method of automatically operating an external storage device.

The above and other aspects of the present invention will become more apparent by describing in detail exemplary embodiments thereof with reference to the attached drawings, in which:
Figures 1A and 1B are diagrams for explaining a process of installing and executing device drivers and application programs for operating a related art external storage device;
Figure 2 is a block diagram of an external storage device according to an exemplary embodiment of the present invention;
Figure 3 illustrates a sector mapping table file according to an exemplary embodiment of the present invention;
Figure 4 is a flowchart illustrating a method of automatically executing (a device driver and application program for operating?) an external storage device, according to an exemplary embodiment of the present invention; and
Figure 5 is a flowchart illustrating Operation 304 illustrated in Figure 4, according to an exemplary embodiment of the present invention.

The present invention will now be described more fully with reference to the accompanying drawings, in which exemplary embodiments of the invention are shown.

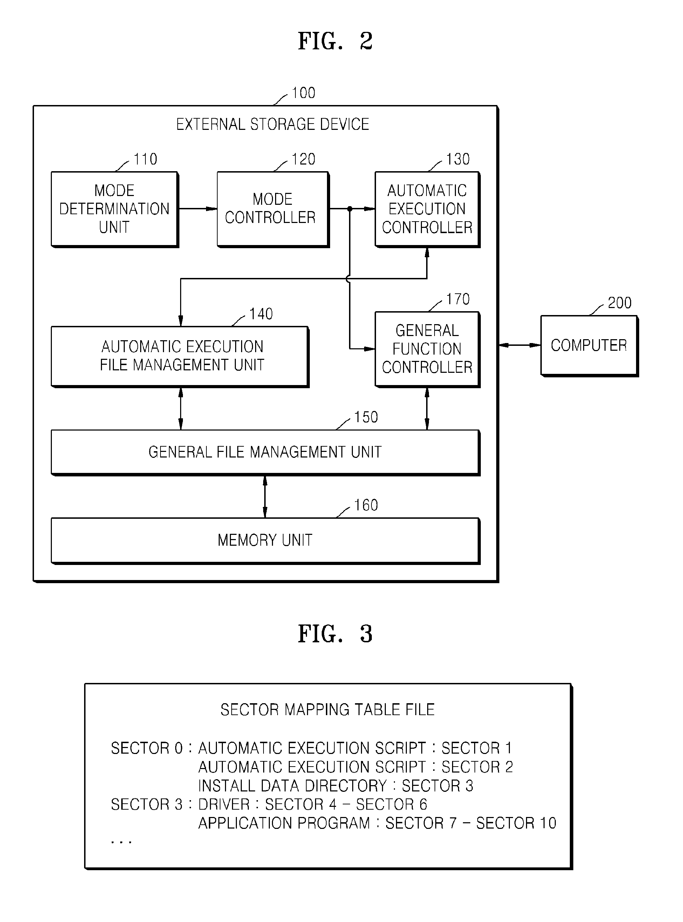

Figure 2 is a block diagram of an external storage device 100 according to an exemplary embodiment of the present invention. Referring to Figure 2, the external storage device 100 according to the current exemplary embodiment of the present invention comprises a mode determination unit 110, a mode controller 120, an automatic execution controller 130, an automatic execution file management unit 140, a general file management unit 150, a memory unit 160, and a general function controller 170.

The mode determination unit 110 determines a mode for automatically operating the external storage device 100 or a mode for performing a general function of the external storage device 100, and outputs a determined signal to the mode controller 120. In the mode for automatically operating the external storage device 100, when the external storage device 100 is connected to a computer 200, the computer 200 can recognize the external storage device 100 as a CD-ROM. In the mode for performing a general function of the external storage device 100, a general function of the external storage device 100 serving as a small computer system interface (SCSI) type hard disk or a network driver can be performed.

The mode determination unit 110 includes a graphic user interface (GUI) or an external switch (not shown) for receiving a mode selection input from a user. The GUI provides the user with a screen for selecting a mode. The external switch is provided to the external storage device 100 in order to select a mode according to a user's operation.

The mode controller 120 controls the operation of one of the automatic execution controller 130 and the general function controller 170 according to the mode determined by the mode determination unit 110. The mode controller 120 operates when the external storage device 100 is connected to the computer 200 using a USB cable or wirelessly. In more detail, if the external storage device 100 is connected to the computer 200, the mode controller 120 determines the mode determined by the mode determination unit 110. In this regard, if the mode is determined as the mode for automatically operating the external storage device 100, the mode controller 120 outputs a control signal for operating the automatic execution controller 130 to the automatic execution controller 130, and if the mode is determined as the mode for performing a general function of the external storage device 100, the mode controller 120 outputs a control signal for operating the general function controller 170 to the general function controller 170.

The mode controller 120 changes a mode of the external storage device 100 to the mode for performing a general function of the external storage device 100 after performing the mode for automatically operating the external storage device 100.

If the automatic execution controller 130 receives a control signal for operating the automatic execution controller 130 from the mode controller 120, the automatic execution controller 130 controls automatic execution of a driver for operating the external storage device 100 and an application program used in the computer 200. When the external storage device 100 is connected to the computer 200, the automatic execution controller 130 controls the external storage device 100 to be recognized as the CD-ROM by the computer. Thus, the computer 200 outputs commands to access an automatic execution script for operating an automatic execution program, the automatic execution program for automatically executing an application program, a driver, and the application program to the automatic execution controller 130. The automatic execution controller 130 outputs automatic execution control signals corresponding to the commands, respectively, to the automatic execution file management unit 140 according to the commands of the computer 200.

The automatic execution file management unit 140 supports access to the automatic execution script, the automatic execution program, the driver, and the application program that are stored in the memory unit 160 through the general file management unit 150 according to the automatic execution control signal of the automatic execution controller 130. For example, if the automatic execution controller 130 requests access to the automatic execution script, the automatic execution file management unit 140 analyzes the command to access the automatic execution script, reads the automatic execution script stored in the memory unit 160 through the general file management unit 150, and outputs the automatic execution script to the automatic execution controller 130.

The automatic execution file management unit 140 refers to a sector mapping table file in order to access a file corresponding to the automatic execution control signal.

Figure 3 illustrates a sector mapping table file according to an exemplary embodiment of the present invention. Referring to Figure 3, the sector mapping table file according to the current exemplary embodiment of the present invention is previously stored in the memory unit 160 that is regarded as a CD-ROM. Sector mapping table information included in the sector mapping table file includes information on a directory structure and each of a plurality of directories and sectors. Therefore, if the computer 200 generates a command to access a CD-ROM sector, the automatic execution file management unit 140 processes the command based on the sector mapping table file stored in the memory unit 160.

The general file management unit 150 supports access to genera data stored in the memory unit 160 according to the a control signal of the general function controller 170. The general file management unit 150 includes information such as a file allocation table (FAT) or the like in order to manage a file used to perform a general function of the external storage device 100. For example, if a general function of the external storage device 100 is serving as an SCSI type hard disk or a network driver, the general file management unit 150 accesses a file, stored in the memory unit 160, which is necessary for operation of an SCSI type hard disk or a network driver, and outputs the file to the general function controller 170. In addition to supporting file management to perform a general function of the external storage device 100, the general file management unit 150 accesses the automatic execution script, the automatic execution program, the driver, and the application program stored in the memory unit 160 according to an access request of the automatic execution file management unit 140, and outputs them to the automatic execution file management unit 140.

The memory unit 160 stores general data, the driver for operating the external storage device 100, the application program used in the computer 200, the automatic execution program for automatically executing the application program in the computer 200, and the automatic execution script for executing the automatic execution program, which are not partitioned from the general data. That the memory unit 160 does not partition the driver, the application program, the automatic execution program, and the automatic execution script from the general data means that a memory region for storing the general data is not partitioned from a memory region for storing the driver, the application program, the automatic execution program, and the automatic execution script. Thus, according to an exemplary embodiment of the present invention, the memory region is not partitioned, so that the whole region of the memory unit 160 can be more efficiently used compared to a related art memory. Since the memory region is not partitioned but stores the general data and the automatic execution data, i.e., the driver, the application program, the automatic execution program, and the automatic execution script, the automatic execution file management unit 140 accesses the driver, the application program, the automatic execution program, and the automatic execution script through the general file management unit 150 in order to automatically operate the external storage device 100. The memory unit 160 includes the sector mapping table file including the sector information on the driver, the application program, the automatic execution program, and the automatic execution script.

If the general function controller 170 receives a control signal for operating the general function controller 170 from the mode controller 120, the general function controller 170 controls a general function of the external storage device 100. In more detail, the general function controller 170 controls the external storage device 100 to be recognized as a SCSI type hard disk or a network driver corresponding to the general function of the external storage device 100. Therefore, if the general function controller 170 receives a command to access genera data for performing a general function from the computer 200, the general function controller 170 outputs an access control signal to the general file management unit 150 according to the command.

Examples of the external storage device 100 include a Moving Picture Experts Group Audio Layer 3 (MP3) player, a portable multimedia player (PMP), and a digital camera.

The computer 200 is connected to the external storage device 100 wirelessly or via a wired connection (e.g., a USB cable or the like) and automatically operates the external storage device 100.

A method of automatically executing the external storage device 100 will now be described in detail with reference to Figures 2 through 5.

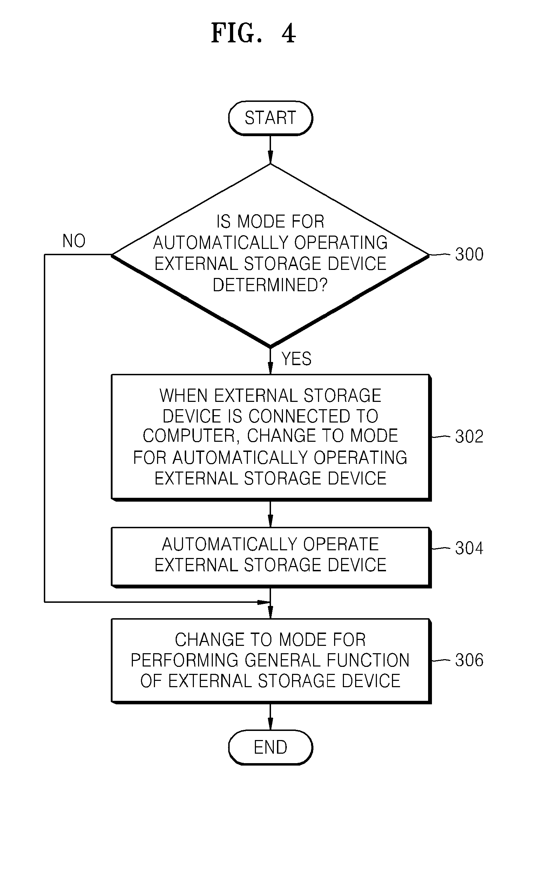

Figure 4 is a flowchart illustrating a method of automatically operating the external storage device 100, according to an exemplary embodiment of the present invention. Referring to Figure 4, a mode for automatically operating the external storage device 100 or a mode for performing a general function of the external storage device 100 is determined (Operation 300). In the mode for automatically operating the external storage device 100, when the external storage device 100 is connected to the computer 200, the external storage device 100 can be recognized as a CD-ROM. In the mode for performing a general function of the external storage device 100, a general function of the external storage device 100 serving as a SCSI type hard disk or a network driver can be performed. If a mode selection input is received from a user through a GUI or an external switch (not shown), the mode is determined according to the selection of the user.

If the mode for automatically operating the external storage device 100 is determined, when the computer 200 is connected to the external storage device 100 including the memory unit 160 for storing general data, the driver for operating the external storage device 100, the application program used in the computer 200, the automatic execution program for automatically executing the application program in the computer 200, and the automatic execution script for executing the automatic execution program, which are not partitioned from the general data, a mode of the external storage device 100 is changed to the mode for automatically operating the external storage device 100 (Operation 302). Since a memory region of the memory unit 160 for storing the general data is not partitioned from a memory region for storing the driver, the application program, the automatic execution program, and the automatic execution script, the whole region of the memory unit 160 can be more efficiently used compared to a related art memory. When the external storage device 100 is connected to the computer 200, the mode controller 120 changes the mode of the external storage device 100 to the mode for automatically operating the external storage device 10.

The driver, the application program, the automatic execution program, and the automatic execution script are accessed from the memory unit 160 in order to automatically operate the external storage device 100 (Operation 304).

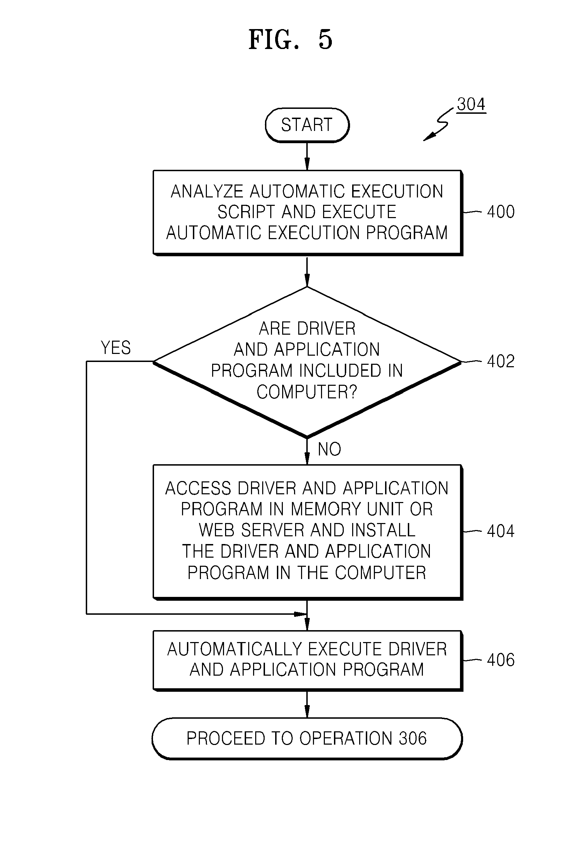

Figure 5 is a flowchart illustrating Operation 304 illustrated in Figure 4. Referring to Figure 5, the computer 200 analyzes the automatic execution script, and executes the automatic execution program (Operation 400). More specifically, if the automatic execution controller 130 has the external storage device 100 recognized as a CD-ROM, the computer 200 outputs a command to access the automatic execution script to the automatic execution controller 130. The automatic execution controller 130 outputs an automatic execution control signal corresponding to the command to the automatic execution file management unit 140 according to the command to access the automatic execution script. The automatic execution file management unit 140 accesses a sector mapping table file stored in the memory unit 160 through the general file management unit 150 in response to the automatic execution control signal. The automatic execution file management unit 140 analyzes the sector mapping table file, verifies a region where the automatic execution script is stored, accesses the automatic execution script stored in the region through the general file management unit 150, and outputs the automatic execution script to the automatic execution controller 130. The automatic execution controller 130 outputs the automatic execution script to the computer 200. The computer 200 analyzes the automatic execution script and requests access to the automatic execution program. If the automatic execution program is transmitted to the computer 200 from the memory unit 160, the automatic execution program is executed in the computer 200.

According to the execution of the automatic execution program, it is determined whether a driver and an application program are stored in the computer 200 (Operation 402). The automatic execution program searches for the driver and application program necessary for automatic operating of the external storage device 100 in the computer 200.

If the driver and application program are not stored in the computer 200, the memory unit 160 is accessed for the driver and application program and reinstalled in the computer 200 (Operation 404). Specifically, the automatic execution program may provide commands to access the driver and application program to the external storage device 100. The automatic execution controller 130 of the external storage device 100 outputs automatic execution control signals corresponding to the commands, respectively, to the automatic execution file management unit 140 according to the commands. The automatic execution controller 130 accesses the sector mapping table file stored in the memory unit 160 through the general file management unit 150 in response to the automatic execution control signals. The automatic execution file management unit 140 analyzes the sector mapping table file, verifies a region where the driver and application program are stored, accesses the driver and application program stored in the region through the general file management unit 150, and outputs the driver and application program to the automatic execution controller 130. The automatic execution controller 130 outputs the driver and application program to the computer 200. The computer 200 installs the driver and application program.

Alternatively, the driver and application program may be obtained from a web server (not shown) other than the memory unit 160 and installed in the computer 200. To this end, the automatic execution program includes link information on the Internet. The automatic execution program provides commands to access the driver and application program to the web server corresponding to the link information. The computer 200 receives the driver and application program from the web server, and installs the driver and application program.

The driver and the application program are automatically executed in the computer 200 (Operation 406). The automatic execution of the application program completes the automatic operation of the external storage device 100 in the computer 200. In Operation 402, if the driver and application program are included in the computer 200, the driver and the application program are also automatically executed.

After Operation 304 is performed, the mode of the external storage device 100 is changed to the mode for a general function thereof after the mode for automatically operating the external storage device 100 is performed (Operation 306). Specifically, if the automatic operation of the external storage device 100 is completed in the computer 200, the external storage device 100 is no longer recognized as a CD-ROM, and the mode of the external storage device 100 may be changed to the mode for the general function thereof. To this end, if the automatic operation of the external storage device 100 is completed, the computer 200 resets the wireless or wired connection between the external storage device 100 and the computer 200. The mode controller 120 changes the mode of the external storage device 100 to the mode for performing a general function of the external storage device 100 according to a reset signal of the wireless or wired connection.

The method of automatically operating the external storage device 100 of the present invention can be embodied as computer readable code/instructions/program on a computer readable recording medium. In more detail, when the computer 200 is connected to the external storage device 100 including the memory unit 160 for storing general data, the driver for operating the external storage device 100, the application program used in the computer 200, the automatic execution program for automatically executing the application program in the computer 200, and the automatic execution script for executing the automatic execution program, are not partitioned from the general data stored in the memory unit 160. Thus, a computer readable recording medium storing a program for executing the method of changing the external storage device 100 to the mode for automatically executing the external storage device 100, and accessing the driver, the application program, the automatic execution program, and the automatic execution script stored in the memory unit 160 and automatically executing the external storage device 100 can be provided.

The invention can also be embodied as a general-purpose digital computer for operating the code/instructions/program on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed network coupled computer systems so that the computer readable code is stored and executed in a distributed fashion. Also, functional programs, code and code segments for accomplishing the present invention can be easily construed by programmer skilled in the art to which the present invention pertains.

As described above, in the external storage device and method of automatically operating the same according to the exemplary embodiments of the present invention, a program stored in the external storage device can be automatically executed even if a CD or a DVD is not provided, a computer connected to the external storage device cannot access the Internet, or whenever the computer connected to the external storage device is changed. Thus, the external storage device of the present invention can be easily used.

Further, software such as a device driver and application program for the automatic operation of the external storage device is not required on a separate recording medium such as a CD or a DVD. Furthermore, the external storage device does not need a separate memory necessary for a CD-ROM function mode or does not need to partition a memory of the external storage device.

While the present invention has been particularly shown and described with reference to exemplary embodiments thereof, it will be understood by those of ordinary skill in the art that various changes in form and detail may be made therein without departing from the scope of the present invention as defined by the following claims.

## Claims

1. An external storage device (100) comprising:
a memory unit (160) having stored therein general data, a driver configured to operate the external storage device (100), an application program, an automatic execution program comprising instructions for automatically executing the application program in a computer (200) connected to the external storage device (100), and an automatic execution script comprising instructions for executing the automatic execution program, wherein the driver, the application program, the automatic execution program and the automatic execution script are not partitioned from the general data in the memory unit (160);
a general function controller (170) configured to control a general function of the external storage device (100);
a general file management unit (150) configured to support an access to the general data stored in the memory unit (160) according to a control signal of the general function controller (170);
an automatic execution controller (130); and
an automatic execution file management unit (140) configured to support an access to the driver, the application program, the automatic execution program, and the automatic execution script through the general file management unit (150) according to a control signal of the automatic execution controller (130).

2. The external storage device of claim 1, wherein the automatic execution controller (130) is configured to output to the automatic execution file management unit (140) automatic execution control signals corresponding to commands, respectively, requested from the computer (200) to access the driver, the application program, the automatic execution program, and the automatic execution script.

3. The external storage device of claim 1 or 2, wherein the memory unit (160) comprises a sector mapping table file comprising sector information on the driver, the application program, the automatic execution program, and the automatic execution script.

4. The external storage device of claim 3, wherein the automatic execution file management unit (140) is configured to refer to the sector mapping table file in order to access a file corresponding to each of the automatic execution control signals and output the file to the automatic execution controller (130).

5. The external storage device of any one of the preceding claims, further comprising:
a mode determination unit (110) configured to determine one of a first mode for automatically operating the external storage device and a second mode for performing a general function of the external storage device (100) as a mode of the external storage device (100); and
a mode controller (120) configured to control at least one of the automatic execution controller (130) and the general function controller (170) according to the mode determined by the mode determination unit (110).

6. The external storage device of claim 5, wherein the mode determination unit (110) comprises at least one of a graphic user interface (GUI) and an external switch configured to receive a mode selection input from a user.

7. The external storage device of claim 5 or 6, wherein the mode controller (110) is configured to operate when the external storage device (100) is connected to the computer (200).

8. The external storage device of claim 5, 6 or 7,wherein the mode controller (120) is configured to change the mode of the external storage device (100) to the second mode for performing the general function of the external storage device (100) after performing the first mode for automatically operating the external storage device.

9. The external storage device of any one of claims 5 to 8, wherein if the mode of the external storage device (100) is the first mode, the external storage device (100) is recognized by the computer (200) as a compact disk read-only memory, and
wherein the general function of the external storage device (100) comprises a function of a small computer system interface type hard disk or a network driver.

10. The external storage device of any one of the preceding claims, wherein the external storage device (100) is a Moving Picture Experts Group Audio Layer 3 player, a portable multimedia player, or a digital camera.

11. A method of automatically operating an external storage device (100), the method comprising:
changing a mode of the external storage device to a first mode for automatically operating the external storage device (100) if a computer (200) is connected to the external storage device, wherein the external storage device (100) comprises a memory unit (160) having stored therein at least one of general data, a driver that operates the external storage device, an application program used in the computer (200), an automatic execution program that automatically executes the application program in the computer (200), and an automatic execution script that executes the automatic execution program, and wherein the automatic execution program and the automatic execution script are not partitioned from the general data; and
accessing the driver, the application program, the automatic execution program, and the automatic execution script; and
executing the driver and the application program.

12. The method of claim 11, wherein the automatically executing of the external storage device (100) comprises:
analyzing the automatic execution script and executing the automatic execution program;
determining whether the driver and the application program are included in the computer (200), the memory unit (160) or available in a web server by executing the automatic execution program;
accessing and executing the driver and the application program according to a result of the determining.

13. The method of claim 12, wherein if it is determined that the driver and the application program are included in the computer (200), the driver and application program are automatically executed.

14. The method of claim 12 or 13, wherein if it is determined that the driver and the application program are not included in the computer (200), the accessing and the executing the driver and the application program comprises:
accessing the driver and the application program stored in the memory unit (160);
installing the driver and the application program in the computer (200); and
automatically executing the driver and the application program.

15. The method of claim 12 or 13, wherein if it is determined that the driver and application program are not included in the computer (200), the accessing and executing the driver and the application program comprises:
accessing the driver and the application program through a web server in which the driver and the application program are stored;
installing the driver and the application program in the computer (200); and
automatically executing the driver and application program.

16. The method of any one of claims 11 to 15, further comprising:
determining one of the first mode for automatically operating the external storage device (100) and a second mode for performing a general function of the external storage device (100) as a mode of the external storage device; and
according to a result of the determining, performing at least one of: an operation corresponding to the first mode and comprising the changing a mode, the accessing the driver, the application program, the automatic execution program, and the automatic execution script, and the executing the driver and the application program and an operation of performing the general function of the external storage device corresponding to the second mode.

17. The method of claim 16, wherein if the mode of the external storage device (100) is the first mode, the external storage device is recognized by the computer (200) as a compact disk read-only memory, and
wherein the general function of the external storage device comprises a function of a small computer system interface type hard disk or a network driver

18. The method of claim 16 or 17, further comprising changing the mode of the external storage device to the second mode after the operation corresponding to the first mode is performed.

19. The method of claim 18, wherein the mode of the external storage device is changed to the second mode by a reset signal generated by the computer that resets the connection between the computer (200) and the external storage device.

20. A computer readable recording medium storing a computer readable program for executing a method of automatically operating an external storage device according to any one of claims 11 to 19.
